# EUROPÄISCHE PATENTSCHRIFT

(11) **EP 1 056 628 B1**
(45) Veröffentlichungstag und Bekanntmachung des Hinweises auf die Patenterteilung: **14.09.2005**
(21) Anmeldenummer: 99955700.2
(22) Anmeldetag: 15.09.1999
(51) Int. Cl.: B60S 1/40

(54) **VORRICHTUNG ZUM GELENKIGEN VERBINDEN EINES WISCHBLATTS FÜR SCHEIBEN VON KRAFTFAHRZEUGEN MIT EINEM WISCHERARM UND VERFAHREN ZUM HERSTELLEN DIESER VERBINDUNG**
DEVICE FOR THE ARTICULATED CONNECTING OF A WIPER BLADE FOR MOTOR VEHICLE WINDOWS TO A WIPER ARM AND METHOD FOR PRODUCING SAID CONNECTION
DISPOSITIF POUR L'ASSEMBLAGE ARTICULE D'UNE RACLETTE D'ESSUIE-GLACE DESTINEE AUX VITRES DE VEHICULES AUTOMOBILES AVEC UN BRAS D'ESSUIE-GLACE, ET PROCEDE DE REALISATION DE CET ASSEMBLAGE

(30) Priorität: 29.12.1998 DE 19860644
(43) Veröffentlichungstag der Anmeldung: 06.12.2000
(73) Patentinhaber: ROBERT BOSCH GMBH, 70442 Stuttgart (DE)
(72) Erfinder: DE BLOCK, Peter, B-3545 Halen (BE)
(86) Internationale Anmeldenummer: PCT/DE1999/002920
(87) Internationale Veröffentlichungsnummer: WO 2000/038964

(56) Entgegenhaltungen:
- EP-A- 0 714 820
- EP-A- 1 037 778
- DE-A- 19 838 883
- GB-A- 1 403 970
- US-A- 4 120 069

## Beschreibung

### Stand der Technik

Die Erfindung betrifft eine Verbindungsvorrichtung nach der Gattung des Anspruchs 1. Bei einer zum Stand der Technik gehörenden Vorrichtung dieser Art (DE 198 38 88 3.7, noch nicht veröffentlicht) gehören zu dieser zwei miteinander verbindbare Kupplungshälften, von denen die eine fest mit dem Wischerarm und die andere fest mit dem Tragelement des Wischblatts verbunden sind. Die mit einem vergleichsweise großen Fertigungsaufwand hergestellten Kupplungshälften gehen verloren, wenn die mit dem Tragelement fest verbundene Wischleiste und/oder der Wischerarm, beispielsweise wegen Verschleiß, ausgetauscht werden müssen.

### Vorteile der Erfindung

Bei.der erfindungsgemäßen Verbindungsvorrichtung mit den kennzeichnenden Merkmalen des Anspruchs 1 sind die wischerarmseitigen Kupplungsmittel durch die in den schon vorhandenen Wangen des Wischerarms angeordneten Lagerbohrungen gebildet. Ein besonders ausgebildetes Kupplungselement kann entfallen. Die Verbindung zwischen Wischerarm und Wischblatt wird von losen, wiederverwendbaren Sicherungselementen übernommen, welche zum einen die Randstreifen der zum ebenfalls vorhandenen Tragelement gehörenden, wiederverwendbaren Längsschienen fassen und zum anderen mit ihren Gelenkzapfen in den Lagerbohrungen des Wischerarms gelagert sind. Somit ist auch ein spezielles, wischblattseitiges Kupplungselement entbehrlich.

Auf einfache Weise wird die Bildung der die Lagerbohrungen aufweisenden Wangen erreicht, wenn der Wischerarm zumindest über einen Längsabschnitt einen etwa U-förmigen Querschnitt hat und die Lagerbohrungen in den die Wangen bildenden U-Schenkeln des Wischerarms angeordnet sind.

Eine besonders einfach zu bewerkstelligende Gelenkverbindung ergibt sich, wenn jedes der beiden Sicherungselemente einen im wesentlichen C-förmigen Querschnitt hat, deren C-Schenkel die Randstreifen der Längs- Federschienen des Tragelements umfassen und die Gelenkzapfen an den Außenseiten der jeweiligen C-Basis angeordnet sind, weil so jedes Sicherungselement mit seinem Gelenkzapfen in die diesem zugeordnete Lagerbohrung eingesetzt werden kann und danach die Randstreifen der in den Aufnahme-Längsnuten der Wischleiste sitzenden Längs- Federschienen des Tragelements in den von der Querschnittsform der Sicherungselemente umschlossenen Aufnahmeraum eingeschoben werden können.

Damit eine vorschriftsmäßige Positionierung des Verbindungsgelenks bezüglich des Tragelements beziehungsweise bezüglich der wischleiste sichergestellt wird, sitzen die Gelenkzapfen jeweils an dem einen Endabschnitt seines Sicherungselements wobei mit Abstand von diesen in jeder C-Basis der beiden Sicherungselemente eine einendig mit dieser verbundene Federzunge angeordnet ist, welche mit einem Rastnocken in den zwischen den C-Schenkeln vorhandenen, rinnenartigen Aufnahmeraum für jeweils eine Federschiene ragt und jede dieser Federschienen mit einer dem jeweiligen Rastnocken zugeordneten Rastaufnahme versehen ist.

Zur Vereinfachung der Vormontage der beiden Sicherungselemente am Wischerarm sind die beiden Sicherungselemente durch Federmittel miteinander verbunden und unter Federspannung an den einander zugekehrten Wangen des Wischerarms angelegt.

Wenn die Wischleiste mit einer sich auf die von der Scheibe angewandten Seite des Tragelements erstreckenden Windabweisleiste versehen werden soll, kann eine Queraussparung für die Federmittel in der Windabweisleiste vermieden werden, weil gemäß einer Fortbildung des Erfindungsgedankens die Federmittel durch ein die Wischleiste querendes im wesentlichen V-förmiges Band gebildet sind, dessen freie Enden der V-Schenkel mit je einem der beiden Sicherungselemente verbunden sind.

Zur weiteren Vereinfachung der Verbindungsvorrichtung sind sowohl die beiden Sicherungselemente als auch das Federband aus einem elastischen Kunststoff hergestellt und einstückig miteinander verbunden.

Eine absolut betriebssichere Verbindung zwischen dem Wischblatt - welches Wischleiste und die Tragelement-Längsschienen umfaßt - und dem Wischerarm, welche auch dem härtesten Wischbetrieb standhält ergibt sich, wenn in Weiterbildung der Erfindung der Wischerarm die C-Basis der beiden Sicherungselemente an deren voneinander abgewandten Außenseiten mit seinen Wangen passend übergreift. Dadurch überdecken die Wangen des Wischerarms die Außenseiten der Federzungen der Sicherungselemente die dadurch nicht mehr auslenkbar und deshalb mit ihren Rastnocken stets in ihren Rastaufnahmen in den Tragelement-Federschienen fixiert sind.

Damit die Tragelement-Federschienen im Bereich der Sicherungselemente nicht durch diese versteift werden, was hinsichtlich der Auflagekraftverteilung durch die gegen die Scheibe vorgespannten Federschienen von Nachteil wäre, sind die Abstände zwischen den beiden C-Schenkeln der Sicherungselemente größer als die Dicke der Federschienen-Randstreifen wobei an der einen Innenwand des einen C-Schenkels eines jeden Sicherungselements wenigstens ein zum anderen C-Schenkel hinvorspringender Stütznocken angeordnet ist. Dadurch ist ein Freiraum für die gekrümmten Federschienen geschaffen, der ein freies Schwingen der Federschienen im rinnenartigen Aufnahmeraum zuläßt. Eine Beeinträchtigung des vorgeschriebenen Kennlinienverlaufs der Federschienen während des Wischbetriebs insbesondere auf sphärisch gekrümmten Scheiben wird vermieden, weil deren Abstützung gegenüber den Sicherungselementen nicht flächig sondern linien- beziehungsweise punktförmig ist.

Die Verbindungsvorrichtung gemäß Anspruch 4 ermöglicht ein besonders vorteilhaftes Verfahren zum Herstellen dieser Gelenkverbindung, bei dem in einem ersten Schritt die Sicherungselemente mit ihren Gelenkzapfen von den einander zugewandten Wangen des Wischerarms aus in ihre Lagerbohrungen eingesetzt werden und danach das mit der Wischleiste versehene Tragelement mit den Randstreifen seiner Längsschienen zwischen die C-Schenkel der Sicherungselemente eingebracht wird, wobei Sicherungsmittel zum Fixieren des Tragelements an den Sicherungselementen wirksam werden. Das erfindungsgemäße Verfahren zeichnet sich durch eine Folge von einfachen, gradlinigen Montagebewegungen aus, so daß es besonders automatenfreundlich ist.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

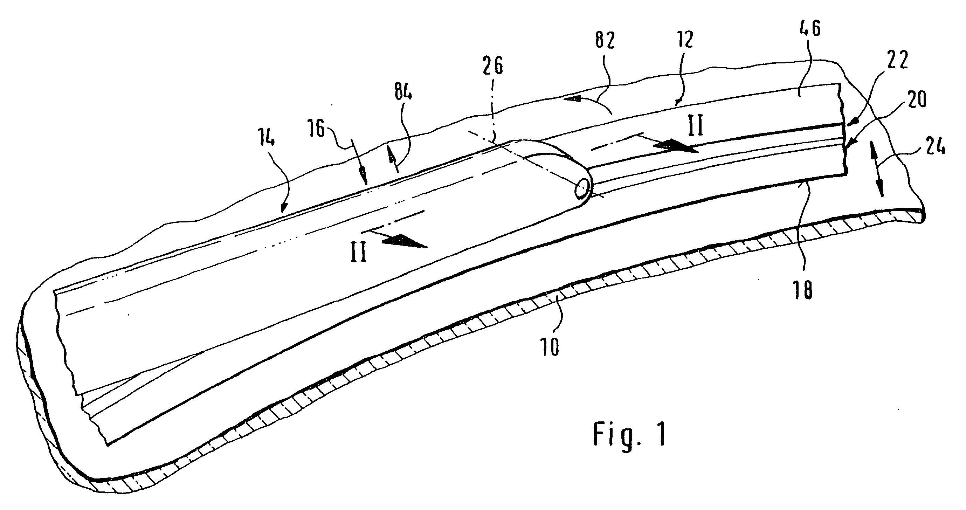

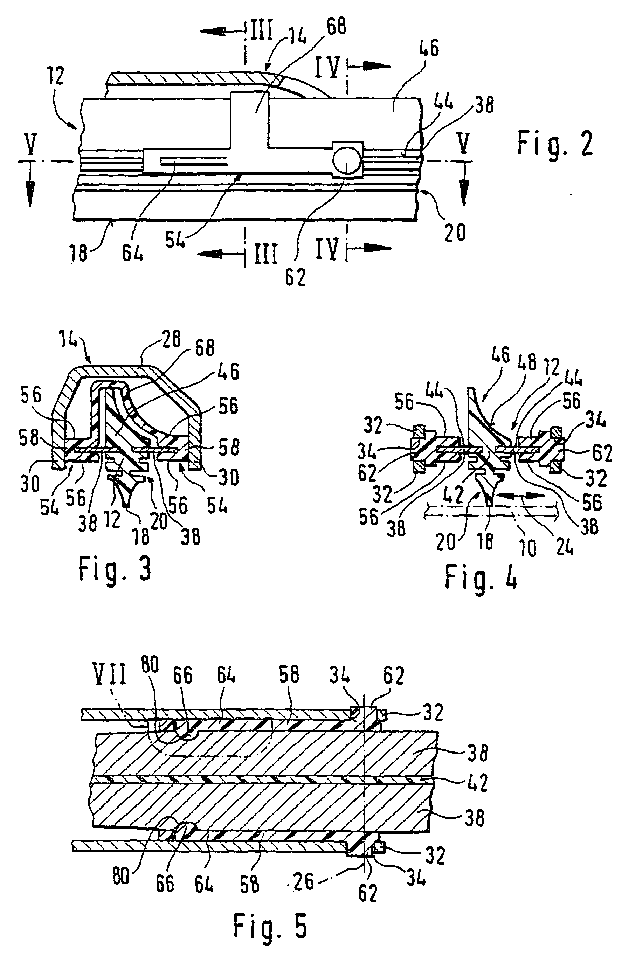

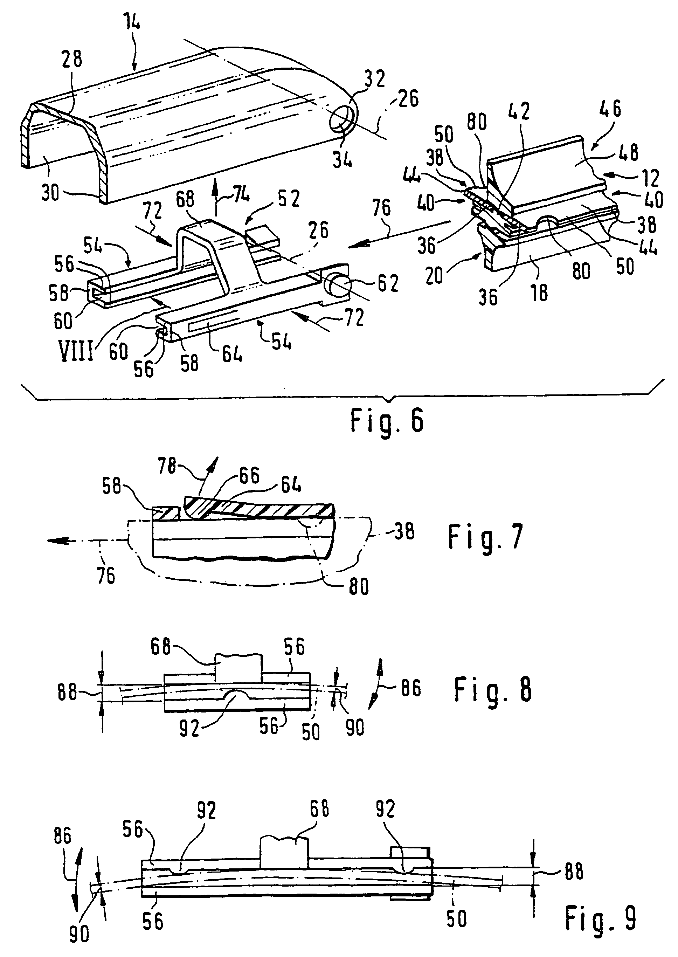

In der Zeichnung zeigen: Figur 1 eine perspektivische Darstellung des Mittelabschnitts eines an einer Scheibe angelegten, mit einem Wischerarm gelenkig verbundenen Wischblatts, Figur 2 einen Teilschnitt durch den Wischerarm und das Wischblatt gemäß Figur 1 entlang der Linie II-II und eine Seitenansicht des mit Sicherungselementen versehenen Wischblatts, Figur 3 die Schnittfläche eines Schnitts entlang der Linie III-III durch die Anordnung gemäß Figur 2, Figur 4 die Schnittfläche eines Schnitts durch die Anordnung gemäß Figur 2, entlang der Linie IV-IV, Figur 5 einen Schnitt entlang der Linie V-V durch die Anordnung gemäß Figur 2, Figur 6 die zur Gelenkverbindung zwischen Wischerarm und Wischblatt erforderlichen Bauteile vor der Montage, Figur 7 eine in Figur 5 mit VII bezeichnete Einzelheit, mit strichpunktiert eingezeichneter, noch nicht vollständig montierter Federschiene, Figur 8 eine gedreht gezeichnete Teilansicht eines Sicherungselements in Richtung des Pfeiles VIII in Figur 6 und Figur 9 eine andere Ausgestaltung des Sicherungselements gemäß Figur 8.

### Beschreibung des Ausführungsbeispiels

Ein in Figur 1 perspektivisch dargestellter Mittelabschnitt eines an einer Scheibe 10 eines Kraftfahrzeuges angelegtes Wischblatts 12 ist am freien Ende eines am Kraftfahrzeug geführten, angetriebenen Wischerarms 14 angelenkt. Der Wischerarm 14 ist in Richtung des Pfeiles 16 zur Scheibe 10 belastet und legt das Wischblatt 10 mit der Wischlippe 18 seiner langgestreckten, gummielastischen Wischleiste 20 an der zu wischenden Oberfläche der Scheibe 10 an: Die Wischleiste 20 wird von einem bandartig langgestreckten Tragelement 22 gehalten, zu dem beim Ausführungsbeispiel zwei Längsschienen 38 gehören. Das Tragelement kann jedoch auch als einteiliges Band ausgebildet sein, an dessen der Scheibe 10 zugewandten unteren Bandfläche die Wischleiste angeordnet ist und mit Randstreifen seitlich über die Wischleiste 20 hinausragt. Die gelenkige Verbindung zwischen Wischerarm 14 und Wischblatt 12 ermöglicht eine kontinuierliche Anpassung der Wischlippe 18 an die in aller Regel sphärisch gekrümmte Scheibe 10, wenn das Wischblatt seine Arbeitsbewegung (Doppelpfeil 24) zwischen Umkehrlagen ausführt. Dabei schwingt das Wischblatt um eine Gelenkachse 26, die in Figur 1 strichpunktiert dargestellt ist.

Die Ausbildung des freien Endes des Wischerarms 14 im Hinblick auf die erfindungsgemäße Verbindungsvorrichtung ist aus Figur 6 ersichtlich. Er hat einen im wesentlichen U-förmigen Querschnitt mit einer U-Basis 28, an die sich zwei U-Schenkel 30 anschließen. Die U-Schenkel 30 sind zur Scheibe 10 (Figur 1) gerichtet. Sie liegen in Arbeits- oder Bewegungsrichtung (Doppelpfeil 24) mit Abstand voneinander und parallel zu einander. Die U-Schenkel 30 erstrecken sich bis zum freien Ende des Wischerarmes und bilden dort Wangen 32 die zur Scheibe stehend angeordnet sind (Figur 4). Weiter ist aus den Figuren 1 und 4 ersichtlich, daß jede der beiden Wangen 32 von einer Lagerbohrung 34 durchdrungen ist, und daß beide Bohrungen eine gemeinsame Längsachse aufweisen, welche identisch ist mit der Gelenkachse 26.

Die Ausgestaltung des Wischblatts 12 zeigen insbesondere die Figuren 3, 4 und 6. Dort ist ersichtlich, daß die langgestreckte, gummielastische Wischleiste 20 mit Abstand von der zu wischenden Scheibe 10 zwei Längsnuten 36 aufweist, die zu den voneinander abgewandten Längsseiten der Wischleiste 20 hin randoffen sind. Die Längsnuten 36 liegen in einer gemeinsamen Ebene und dienen zur Aufnahme jeweils einer Längsschiene 38, deren Länge etwa der Länge der Wischleiste 20 entspricht. Die beiden Längsschienen 38 gehören zu einem bandartig langgestreckten, federelastischen Tragelement 40, welches die gummielastische Wischleiste 20 stabilisiert. Die Wischleiste 20 erstreckt sich mit einer Stegleiste 42 zwischen den beiden Längsschienen 38 hindurch auf die von der Scheibe 10 abgewandte Oberseite 44 des Tragelements 40. Dort ist die Wischleiste 20 als Windabweisleiste 46 ausgebildet. Die Windabweisleiste 46 weist über ihre Längserstreckung, welche zumindest annähernd der Länge der Wischleiste 20 entspricht, eine Längskehlung 48 auf, die während des Wischbetriebs der Hauptströmungsrichtung des Fahrtwindes entgegen gerichtet ist und so für eine Verstärkung des Anpressdrucks der Wischlippe 18 an der Scheibe 10 sorgt. Dies ist zweckmäßig, weil insbesondere bei hohen Fahrgeschwindigkeiten durch das Zusammenwirken mehrere Komponenten der durch den Pfeil 16 in Figur 1 angedeutete Anpressdruck für das Wischblatt abgeschwächt wird. Weiter ist den Figuren 4 und 6 entnehmbar, daß jede der federelastischen Längsschienen 38 zumindest über einen Längsabschnitt mit einem Randstreifen 50 aus seiner Längs-Aufnahmenut 36 der Wischleiste 20 ragt.

Damit das Wischblatt 12 mit dem Wischerarm 14 gelenkig verbunden werden kann ist ein in Figur 6 perspektiv dargestellter Adapter 52 vorgesehen, der zwei Sicherungselemente 54 aufweist von denen jedes einem der beiden Randstreifen 50 zugeordnet ist. Jedes der beiden Sicherungselemente 54 hat einen im wesentlichen C-förmigen Querschnitt. Ihre Anordnung zueinander ist so getroffen, daß die freien Enden der C-Schenkel 56 gegeneinander gerichtet sind. Daraus ergibt sich, daß die jeweiligen Basiswände 58 an den voneinander abgewandten Seiten der C-Schenkel 56 liegen. Der zwischen den beiden zu einem Sicherungselement 54 gehörenden C-Schenkel 56 verbleibende, rinnenförmige Raum 60 dient zur Aufnahme der Randstreifen 50 der Längsschienen 38 beziehungsweise des Tragelements 40 (Figuren 3 und 4). Weiter zeigt Figur 6, daß an dem einen Endabschnitt eines jeden Sicherungselements 54 ein Gelenkzapfen 62 angeordnet ist und daß beide Gelenkzapfen so aufeinander abgestimmt sind, daß sie eine gemeinsame Längsachse haben, welche in zusammengebautem Zustand - der später erläutert wird - sich mit der Gelenkachse 26 der Lagerbohrungen 34 deckt. Weiter zeigen die Figuren 5 bis 7, daß mit Abstand von den Gelenk- oder Lagerzapfen 62 in jeder C-Basiswand 58 der beiden Sicherungselemente 54 eine einendig mit der Basiswand verbundene Federzunge 64 ausgebildet ist, die an ihrem freien Ende mit einem Rastnocken 66 versehen ist. Die Anordnung der beiden Rastnocken 66 an den beiden Federzungen 64 ist so getroffen, daß diese gegeneinander gerichtet sind. Bei der hier zu beschreibenden Ausführungsform der Erfindung sind die beiden Sicherungselemente 54 durch ein im wesentlichen V-förmiges Band 68 miteinander verbunden (Figur 3). Dazu geht jedes der freien Enden des V-Schenkel 70 einstückig in eines der beiden Sicherungselemente 54 über. Der so gebildete Adapter 52 ist einstückig aus einem federelastischen Kunststoff hergestellt. Somit ist eine gegen eine Rückstellkraft gerichtete Auslenkbewegung (Pfeil 78 in Figur 7) der beiden Federzungen 64 möglich. Auch die beiden zum Adapter 52 gehörende Sicherungselemente 54 sind entgegen einer von dem als Blattfeder wirkenden V-förmigen Band 68 ausgehenden Rückstellkraft aufeinander zubewegbar.

Zu der erfindungsgemäßen Vorrichtung zum Verbinden des Wischblatts mit dem Wischerarm gehören neben dem freien, mit den Lagerbohrungen 34 versehenen Ende des Wischerarms 14 die Randstreifen 50 der zum Tragelement 40 gehörenden Längsschienen 38 und der mehrere Funktionen ausführende Adapter 52. Der Vorgang des Verbindens wird im folgenden anhand insbesondere der Figur 6 erläutert. Zuerst wird der Adapter 52 in Richtung der beiden Pfeile 72 soweit zusammen gedrückt, daß die beiden Gelenkzapfen 62 zwischen die Wangen 32 des Wischerarms 14 eingebracht werden können. Dies geschieht gegen die Rückstellkraft des als Blattfeder wirkenden V-förmigen Bandes 68. Die Montage des Adapters 52 am Wischerarm 14 erfolgt in Richtung des Pfeiles 74. Durch eine entsprechende maßliche Auslegung des Adapters 52 gelangen nun die beiden Gelenkzapfen 62 in ihre Lagerbohrungen 64 wobei die Basiswände 58 der beiden Sicherungselemente 54 bei entspanntem Adapter 62 praktisch spiellos den Wangen 32 angenähert sind. Nach diesem Montageschritt ist der Adapter 52 der weiteren Montage zugänglich ohne daß er deshalb besonders gesichert werden muß. Er hängt mit seinem von den Gelenkzapfen 62 abgewandten Ende aus der U-Form des Wischerarms 14 heraus so daß die Federzungen 64 frei liegen. In einem nächsten Montageschritt wird das entsprechend Figur 6 vormontierte Wischblatt - die beiden Längsschienen 38 sitzen in ihren Längsnuten 36 der Wischleiste 20 - in Richtung des Pfeiles 76 so in den Adapter 52 gefügt, daß die beiden Randstreifen 50 der Längsschienen 38 in die rinnenförmige Räume 60 der beiden Sicherungselemente 54 gelangen. Bei diesem Montagevorgang werden die beiden Sicherungselemente 54 nicht oder nur minimal auseinander gedrückt. Wenn die beiden Längsschienen 38, die das Tragelement 40 bilden, gegen die in den Raum 60 ragenden Rastnocken 66 stoßen lenken die Federzungen 64 in Richtung des Pfeiles 78 gegen eine Rückstellkraft aus (Figur 7) so daß das Wischblatt 12 weiter in Richtung des Montagepfeils in den Adapter 52 eingeschoben werden kann. In Figur 7 sind sowohl der eine Randstreifen 50 als auch der Montagepfeil 76 strichpunktiert gezeichnet. Wenn das Wischblatt 12 in Bezug auf die Gelenkachse 26 in vorschriftsmäßige Position erreicht hat, rastet der Rastnocken 66 einer jeden Federzunge 64 in Rastaufnahmen 80, welche durch randoffene Aussparungen in den Randstreifen 50 gebildet sind. In der nun erreichten Betriebsposition des Wischblatts gegenüber dem Wischerarm wird dieses nun in Richtung des Pfeiles 82 in Figur 1 um die Gelenkachse 26 in seine Betriebsstellung geschwenkt, in welcher es mit seiner Wischleiste 20 an der Scheibe 10 zur Anlage kommt. Dabei tauchen die Basiswände 58 der beiden Sicherungselemente 54 mit den voneinander abgewandten Außenseiten zwischen die U-Schenkel 30 beziehungsweise zwischen die Wangen 32 der U-Schenkel 30 ein und werden von diesen an den voneinander abgewandten Außenseiten der Sicherungselemente passend übergriffen. Passend bedeutet in diesem Zusammenhang, daß ein Auslenken der Federzungen 64 in Richtung der Pfeile 78 nicht mehr möglich ist. Andererseits soll jedoch zwischen den Sicherungselementen 54 des Adapters 52 und den U-Schenkeln 30 des Wischerarms 14 keine Klemmwirkung entstehen, so daß ein freies, ungehindertes Schwingen des Wischblatts 12 während des Wischbetriebs um die Gelenkachse 26 möglich ist. Der Adapter 52 übt neben seiner Gelenkfunktion - zusammen mit dem Wischerarm - und der Wischblattpositionierung - zusammen mit den Randstreifen 50 beziehungsweise mit den in diesen vorhandenen Rastaufnahmen 80 - auch eine weitere Sicherungsfunktion aus, welche darin zu sehen ist, daß bei in Betrieb befindlichem Wischblatt dieses - wegen der Rastnocken 66 und der mit diesen zusammenarbeitenden und Rastaufnahmen 80 bewirkten Verriegelung - sich nicht vom Wischerarm 14 lösen kann. Auch sichert der Adapter 52 mit seinen beiden Sicherungselementen 54 die in den rinnenförmigen Räumen 60 liegenden Feder-Längsschienen 38 des Tragelements 40 gegen seitliches Herauswandern aus den Längsnuten 36 während des Wischbetriebs. Auch wenn das Wischblatt zusammen mit dem Wischerarm in Richtung des Pfeiles 84 in Figur 1 von der Scheibe weggeklappt ist kann sich das Wischblatt nicht unbeabsichtigt vom Wischerarm lösen, auf die Fahrzeugkarrosserie herabfallen und dort Schäden anrichten. Schließlich bewirkt die die beiden Sicherungselemente 54 verbindende Blattfeder 68 einmal eine einfache Montage des Adapters zwischen den Wangen 32 und zum anderen ermöglicht die V-Form der Blattfeder 68 ein Überqueren der Windabweisleiste 46. Queraussparungen in der Windabweisleiste 46, welche besondere Arbeitsschritte erfordern, können somit entfallen.

Wie die Figuren 8 und 9 zeigen, sind die Abstände 88 zwischen die beiden C-Schenkeln 56 der Sicherungselemente 54 größer als die Dicke 90 der Federschienen-Randstreifen 50. Im Hinblick auf eine freie Beweglichkeit der beiden Längsschienen 38 beziehungsweise des Tragelements 40 in Richtung der Pfeile 86 ist gemäß einer ersten Ausführung an der einen Innenwand des eines C-Schenkels ein zum anderen C-Schenkel hinvorspringender Stütznocken 92 angeordnet (Figur 9). Bei der Ausführungsform gemäß Figur 8 sind an der einen Innenwand des C-Schenkels des Sicherungselements zwei mit Abstand voneinander angeordnete Stütznocken vorhanden. Durch beide Ausführungen ist erreicht, daß sich während des Wischbetriebs die Längsschienen 38 beziehungsweise das Tragelement 40 frei in Richtung der Doppelpfeile 86 schwingen können, so daß sich die Wischlippe dem Oberflächenverlauf der Scheibe 10 anpassen kann.

Zum Lösen des Wischblatts 12 vom von der Scheibe 10 abgeklappten Wischerarm 14 (Pfeil 84 in Figur 1), wird dieses so um die Gelenkachse 26 geschwenkt (Pfeil 82 in Figur 1), daß die Federzungen 64 freiliegen. Nun kann die Wischleiste 20 zusammen mit den Längsschienen 38 mit einem Ruck in Richtung des Pfeiles 76 in Figur 7 aus den Sicherungselementen 54 des Adapters 52 herausgezogen werden, weil die Federzungen 64 nun auslenken und die Rastnocken 66 aus ihren Rastaufnahmen 80 gelangen können.

Die wesentlichen Verfahrensschritte zum gelenkigen Verbinden des Wischblatts 12 für Scheiben 10 von Kraftfahrzeugen mit einem Wischerarm 14 sollen nachfolgend noch einmal klar herausgestellt werden. In einem ersten Montageverfahrensschritt werden die Sicherungselemente 54 mit ihren Gelenkzapfen 62 von den einander zugewandten Wangen 32 des Wischerarms 14 aus in ihre Lagerbohrungen 34 eingesetzt und danach wird das mit der Wischleiste 20 versehene Tragelement 40 beziehungsweise dessen beide Längsschienen 38 mit den Randstreifen 50 zwischen die C-Schenkel 56 der Sicherungselemente 54 eingebracht wobei Sicherungsmittel 66, 80 zum Fixieren des Tragelements 40 an den Sicherungselementen 54 bzw. gegenüber dem Wischerarm 14 - weil die Sicherungselemente mit ihren Gelenkzapfen 62 von den Lagerbohrungen 34 des Wischerarms 14 aufgenommen sind - wirksam werden.

## Patentansprüche

1. Vorrichtung zum gelenkigen Verbinden eines Wischblatts (12) für Scheiben (10) von Kraftfahrzeugen mit einem an diesem geführten, zwischen Umkehrlagen bewegbaren Wischerarm (14), der zwei in Bewegungsrichtung mit Abstand voneinander, parallel zueinander und zur Scheibe stehend angeordnete Wangen (32) hat, die je von einer eine gemeinsame Längsachse (26) aufweisenden Lagerbohrung (34) durchdrungen sind, mit einer langgestreckten, gummielastischen an der zu wischenden Scheibe (10) mit einer Wischlippe (18) anlegbaren, von einem bandartig langgestreckten, federelastischen Tragelement (40) gehaltenen Wischleiste (20) und mit zwei zur Gelenkverbindung gehörenden, quer zur Längserstreckung des Tragelements ausgerichteten, in jeweils einer der beiden Lagerbohrungen (34) geführten Gelenkzapfen (62), **dadurch gekennzeichnet, dass** die Wischleiste (20) an ihren Längsseiten je eine Aufnahme-Längsnut (36) für jeweils eine Längsschiene (38) des Tragelements (40) hat aus der jede zumindest über einen Längsabschnitt mit einem Randstreifen (50) ragt, dass jeder Randstreifen (50) von einem Sicherungselement (54) gefasst ist, die an einem am Wischarm (14) vormontierbaren Adapter (52) angeordnet sind, und dass an den voneinander abgewandten Längsseiten eines jedes Sicherungselements (54) jeweils einer der beiden Gelenkzapfen (62) angeordnet ist.

2. Vorrichtung nach Anspruch 1 **dadurch gekennzeichnet, daß** der Wischerarm (14) zumindest über einen Längsabschnitt einen etwa U-förmigen Querschnitt hat und daß die Lagerbohrungen (34) in den die Wangen (32) bildenden U-Schenkeln (30) des Wischerarms (14) angeordnet sind.

3. Vorrichtung nach einem der Ansprüche 1 oder 2, **dadurch gekennzeichnet, daß** jedes der beiden Sicherungselemente (54) einen im wesentlichen C-förmigen Querschnitt hat deren C-Schenkel (56) die Randstreifen (50) der Längs-Federschienen (38) des Tragelements (40) umfassen und daß die Gelenkzapfen (62) an den Außenseiten der jeweiligen C-Basis (58) angeordnet sind.

4. Vorrichtung nach Anspruch 3 **dadurch gekennzeichnet, daß** die Gelenkzapfen (62) jeweils an dem einen Endabschnitt eines Sicherungselements (54) sitzen, daß mit Abstand von diesen in jeder C-Basis (58) der beiden Sicherungselemente (54) eine einendig mit dieser verbundene Federzunge (64) angeordnet ist, die mit einem Rastnocken (66) in den zwischen den C-Schenkeln vorhandenen rinnenartigen Aufnahmeraum (60) für jeweils eine Federschiene (38) ragt und daß jede dieser Federschienen mit einer dem jeweiligen Rastnocken (66) zugeordneten Rastaufnahme (80) versehen ist.

5. Vorrichtung nach einem der Ansprüche 1 bis 4 **dadurch gekennzeichnet, daß** die beiden Sicherungselemente (54) durch Federmittel (68) miteinander verbunden sind.

6. Vorrichtung nach Anspruch 5, **dadurch gekennzeichnet, daß** die Federmittel durch ein die Wischleiste (20) querendes, im wesentlichen V-förmiges Band (68) gebildet sind, dessen freie Enden der V-Schenkel (70) mit je einem der beiden Sicherungselemente (54) verbunden sind.

7. Vorrichtung nach Anspruch 6, **dadurch gekennzeichnet, daß** sowohl die beiden Sicherungselemente (54) als auch das Federband (68) aus einem elastischen Kunststoff hergestellt und einstückig miteinander verbunden sind.

8. Vorrichtung nach einem der Ansprüche 4 bis 7, **dadurch gekennzeichnet, daß** der Wischerarm (14) die C-Basis (58) der beiden Sicherungselemente (54) an deren voneinander abgewandten Außenseiten mit seinen Wangen (32) passend übergreift.

9. Vorrichtung nach einem der Ansprüche 3 bis 8, **dadurch gekennzeichnet, daß** die Abstände (88) zwischen den beiden C-Schenkeln (56) eines jeden Sicherungselements (54) größer ist als die Dicke (90) der Federschienen-Randstreifen (50) und daß an der einen Innenwand des einen C-Schenkels eines jeden Sicherungselements wenigstens ein zum anderen C-Schenkel hinvorspringender Stütznocken (92) angeordnet ist.

10. Verfahren zum gelenkigen Verbinden eines Wischblatts mit einem Wischerarm mittels einer Vorrichtung gemäß einem der Ansprüche 4 bis 9, bei dem in einem ersten Verfahrensschritt die Sicherungselemente (54) mit ihren Gelenkzapfen (62) von den einander zugewandten Wangen (32) des Wischerarms (14) aus in ihre Lagerbohrungen (34) eingesetzt werden und danach das mit der Wischleiste (20) versehene Tragelement (40) mit den Randstreifen (50) seiner Längsschienen (38) zwischen die C-Schenkel (56) der Sicherungselemente (54) eingebracht wird wobei Sicherungsmittel (66, 80) zum Fixieren des Tragelements an den Sicherungselementen wirksam werden.

## Claims

1. Apparatus for the articulated connection of a wiper blade (12) for window panes (10) of motor vehicles to a wiper arm (14) which is guided thereon, can be moved between reversal positions and has two cheeks (32) which are arranged in parallel with one another at a distance from one another in the direction of movement and so as to be perpendicular with respect to the window pane, which cheeks (32) are each penetrated by a bearing hole (34) which has a common longitudinal axis (26), having an elongate, elastomeric wiper strip (20) which can be placed by way of a wiper lip (18) against the window pane (10) to be wiped and which is held by a resilient carrying element (40) which is elongate in the manner of a strap, and having two pivots (62) which belong to the articulated connection, are oriented transversely with respect to the longitudinal extent of the carrying element and are guided in a respective one of the two bearing holes (34), **characterized in that** the wiper strip (20) has in each case one receiving longitudinal groove (36) on its longitudinal sides for in each case one longitudinal rail (38) of the carrying element (40), from which receiving longitudinal groove (36) each longitudinal rail (38) protrudes with an edge strip (50) at least over a length section, **in that** each edge strip (50) is gripped by a securing element (54) which are arranged on an adapter (52) which can be premounted on the wiper arm (14), and **in that** in each case one of the two pivots (62) is arranged on the longitudinal sides of each securing element (54) which face away from one another.

2. Apparatus according to Claim 1, **characterized in that** the wiper arm (14) has an approximately U-shaped cross section at least over a length section, and **in that** the bearing holes (34) are arranged in the U-limbs (30) of the wiper arm (14) which form the cheeks (32).

3. Apparatus according to either of Claims 1 and 2, **characterized in that** each of the two securing elements (54) has a substantially C-shaped cross section, the C-limbs (56) of which surround the edge strips (50) of the longitudinal spring rails (38) of the carrying element (40), and **in that** the pivots (62) are arranged on the outer sides of the respective base (58) of the C.

4. Apparatus according to Claim 3, **characterized in that** the pivots (62) are seated in each case at one end section of a securing element (54), **in that** a spring tongue (64) which is connected at one end to the base (58) of the C is arranged in each said base (58) of the C of the two securing elements (54) at a distance from the said pivots (62), which spring tongue (64) protrudes with a latching cam (66) into the channel-like receiving space (60) present between the C-limbs for in each case one spring rail (38), and **in that** each of these spring rails is provided with a latching receptacle (80) which is assigned to the respective latching cam (66).

5. Apparatus according to one of Claims 1 to 4, **characterized in that** the two securing elements (54) are connected to one another by spring means (68).

6. Apparatus according to Claim 5, **characterized in that** the spring means are formed by a substantially V-shaped strap (68) which traverses the wiper strip (20) and the free ends of the V-limb (70) of which are connected in each case to one of the two securing elements (54).

7. Apparatus according to Claim 6, **characterized in that** both the two securing elements (54) and the spring strap (68) are manufactured from an elastic plastic and are connected integrally to one another.

8. Apparatus according to one of Claims 4 to 7, **characterized in that** the cheeks (32) of the wiper arm (14) engage in a fitting manner over the base (58) of the C of the two securing elements (54) at their outer sides which face away from one another.

9. Apparatus according to one of Claims 3 to 8, **characterized in that** the distances (88) between the two C-limbs (56) of each securing element (54) are greater than the thickness (90) of the spring-rail edge strips (50), and **in that** at least one supporting cam (92) which protrudes towards the other C-limb is arranged on one inner wall of one C-limb of each securing element.

10. Method for the articulated connection of a wiper blade to a wiper arm by means of an apparatus according to one of Claims 4 to 9, in which, in a first method step, the securing elements (54) with their pivots (62) are inserted into their bearing holes (34) starting from the cheeks (32) of the wiper arm (14) which face one another, and subsequently the carrying element (40) which is provided with the wiper strip (20) is introduced with the edge strips (50) of its longitudinal rails (38) between the C-limbs (56) of the securing elements (54), securing means (66, 80) for fixing the carrying element becoming active at the securing elements.

## Revendications

1. Dispositif pour relier de manière articulée un balai d'essuie-glace (12) pour des vitres (10) de véhicules automobiles, comportant
- un bras (14) guidé contre la vitre entre deux positions d'inversion, ce bras ayant deux joues (32), parallèles, écartées l'une de l'autre dans la direction de déplacement et dirigées vers la vitre, ces deux joues étant traversées chacune par un perçage formant palier (34) situé sur un axe longitudinal (26) commun,
- une lame d'essuyage (20), allongée, ayant l'élasticité du caoutchouc, s'appliquant contre la vitre (10) à essuyer par l'intermédiaire de sa lèvre d'essuyage (18), cette lame étant tenue par un élément de support (40), allongé en forme de ruban ayant l'élasticité d'un ressort, et
- deux axes d'articulation (62) faisant partie de la liaison articulée, ces axes étant dirigés transversalement à l'extension longitudinale de l'élément de support pour être guidés dans chacun des deux perçages de palier (34),
**caractérisé en ce que**
la lame d'essuyage (20) possède sur ses grands côtés une rainure longitudinale (36) pour recevoir chacune un rail longitudinal (38) de l'élement de support (40) et dont dépasse chaque rail sur au moins un segment de longueur par une bande marginale (50),
chaque bande marginale (50) étant prise par un élément de fixation (54), prévu sur un adaptateur (52) préassemblé sur le bras d'essuyage (14), et.
sur les grands côtés non tournés l'un vers l'autre de chaque élément de fixation (54) se trouve l'un des deux axes d'articulation (62).

2. Dispositif selon la revendication 1,
**caractérisé en ce que**
le bras d'essuie glace (14) a une section sensiblement en forme de U sur au moins un segment de longueur et les perçages de palier (34) sont prévus dans les branches en U (30) du bras d'essuie glace (14) formant les joues (32).

3. Dispositif selon l'une des revendications 1 ou 2,
**caractérisé en ce que**
chacun des éléments de fixation (54) a une section essentiellement en forme de C dont les branches (56) du C entourent les bandes marginales (50) des rails élastiques longitudinaux (38) de l'élément de support (40), et
les axes d'articulation (52) sont prévus sur le côté extérieur de chacune des bases du C (58).

4. Dispositif selon la revendication 3,
**caractérisé en ce que**
les axes d'articulation (62) sont prévus chacun sur un segment d'extrémité de l'élément de fixation (54),
et à distance de ces axes, chaque base du C (58) des deux éléments de fixation (54) comporte une languette élastique (64) dont une extrémité est reliée à l'élément, cette languette venant par un bec d'encliquetage (66) dans la cavité de réception (60) en forme de gorge entre les branches du C pour chaque rail élastique (38), et
chacun de ces rails élastiques est muni d'un logement d'encliquetage (80) associé à chaque bec d'encliquetage (66).

5. Dispositif selon l'une des revendications 1 à 4,
**caractérisé en ce que**
les deux éléments de fixation (54) sont reliés par un moyen élastique (68).

6. Dispositif selon la revendication 5,
**caractérisé en ce que**
le moyen élastique est formé par un ruban (68) essentiellement en forme de V qui passe transversalement sur la lame d'essuyage (20), les extrémités libres de la branche (70) en forme de V étant reliées chacune à l'un des deux éléments de fixation (54).

7. Dispositif selon la revendication 6,
**caractérisé en ce qu'**
à la fois les deux éléments de fixation (54) et aussi le ruban élastique (68) sont fabriqués en une matière plastique élastique et sont reliés en une seule pièce.

8. Dispositif selon l'une des revendications 4 à 7,
**caractérisé en ce que**
le bras d'essuyage (14) chevauche les bases du C (58) des deux éléments de fixation (54) par leurs côtés extérieurs non tournés l'un vers l'autre avec ses joues (32) par un chevauchement adapté.

9. Dispositif selon l'une des revendications 3 à 8,
**caractérisé en ce que**
l'écartement (88) entre les deux branches du C (56) de chaque élément de fixation (54) est supérieur à l'épaisseur (90) des bandes marginales (50) des rails élastiques, et
sur une paroi intérieure d'une branche du C de chacun des éléments de fixation, au moins un bec d'appui (90) est en saillie vers l'autre branche du C.

10. Procédé de liaison articulée d'un balai d'essuie-glace à un bras d'essuie-glace à l'aide d'un dispositif selon l'une des revendications 4 à 9,
selon lequel
dans une première étape du procédé on mstale les éléments de fixation (54) avec leur axe d'articulation (62) placés dans les perçages de palier (34) des joues en regard (32) du bras d'essuie-glace (14), et ensuite on introduit l'élément de support (40) muni de la lame d'essuyage (20) avec ses bandes marginales (50) de ces rails longitudinaux (38) entre les branches du C (56) des éléments de fixation (54), le moyen de fixation (66, 80) servant à fixer l'élément de support aux éléments de fixation.
